# EUROPEAN PATENT APPLICATION

(11) **EP 2 819 261 A1**
(43) Date of publication of application: **31.12.2014**
(21) Application number: 14173432.7
(22) Date of filing: 23.06.2014
(51) Int. Cl.: H02J 3/38

(54) **Electric power source assembly for a vehicle and vehicle equipped with electric power source assembly**

(30) Priority: 26.06.2013 FI 20135697
(71) Applicant: ABB Oy, 00380 Helsinki (FI)
(72) Inventor: Ronkainen, Teemu, 00380 Helsinki (FI); Kajander, Vesa, 00380 Helsinki (FI); Friman, Aarne, 00380 Helsinki (FI)
(74) Representative: Kolster Oy Ab

(57) **Abstract**

An electric power source assembly for a vehicle, the power source assembly comprising a plurality of converter unit groups (GC, EC1, MC), each one of which comprises at least one converter unit, each converter unit comprising a plurality of controllable switches (S1 to S6), a first terminal group and a second terminal group, the first terminal group comprising two first terminals (T11, T12) and the second terminal group comprising three second terminals (T21, T22, T23), and control means (CTRL) for controlling the plurality of controllable switches (S1 to S6) in at least one converter unit of each converter unit group, the plurality of converter unit groups comprising at least one converter unit group (MC, MVC) in which at least one converter unit is arranged to operate as an inverter. The plurality of converter unit groups further comprise at least one converter unit group (EC1, EC2, HR), in which at least one converter unit is adapted to operate as a direct-voltage converter, the converter units in the plurality of converter unit groups (GC, MC, EC1, EC2, HR) being identical with one another.

## Description

### Background of the invention

The invention relates to an electric power source assembly for a vehicle.

A vehicle equipped with an electric power source assembly, such as a hybrid or electric vehicle, comprises numerous voltage converters for various purposes. A problem with known electric power source assemblies is that the numerous voltage converters of different type increase the manufacturing and maintenance costs of the vehicle.

### Brief description of the invention

An object of the invention is to provide an electric power source assembly that allows the above-mentioned problem to be solved. The object of the invention is achieved by an electric power source assembly which is characterised by what is stated in independent claim 1. Preferred embodiments of the invention are disclosed in dependent claims.

The invention is based on using identical converter units for different tasks in different converted unit groups. In one converter unit group, a converter unit is used as an inverter, whereas in another converter unit group, an identical converter unit is used as a direct-voltage converter. It is also possible to use an identical converter unit as a rectifier.

The electric power source assembly according to the invention provides the advantage that the manufacturing and maintenance costs are lower due to larger production series of the converter units and a smaller number of spare part items, among other things.

### Brief description of the drawings

The invention will now be described in more detail by means of preferred embodiments and with reference to the accompanying drawings, in which:
Figure 1 shows an electric power source assembly for a vehicle according to an embodiment of the invention; and
Figure 2 shows a simplified circuit diagram of one converter unit in the electric power source assembly of Figure 1.

### Detailed description of the invention

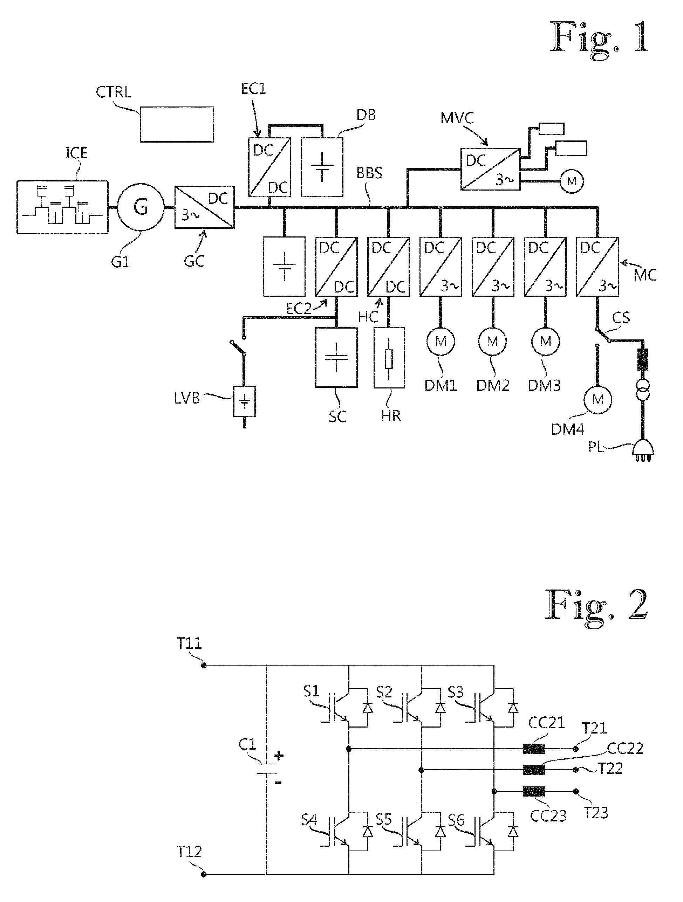

The electric power source assembly for a vehicle according to Figure 1 comprises a direct-voltage bus bar system BBS, converter unit groups GC, EC1, MVC, EC2, HC, and MC connected to the direct-voltage bus bar system BBS, and control means CTRL for controlling the converter unit groups. The power source assembly also comprises generator means G1, driving force battery set DB, low-voltage energy storage means, heat resistor means HR, four three-phase drive motors DM1 to DM4, and mains powered charger means.

The drive motor converter unit group MC comprises four converter units, and each of the other converter unit groups comprises one converter unit. The converter units of all converter unit groups are identical. Thus, the power source assembly of Figure 1 comprises nine identical converter units.

Figure 2 shows a simplified circuit diagram of one converter unit. Figure 2 shows that each identical converter unit comprises controllable switches S1 to S6 and a first terminal group and a second terminal group. The first terminal group comprises first terminals T11 and T12, and the second terminal group comprises second terminals T21, T22, and T23. A capacitor C1 is connected between the first terminals T11 and T12. The first terminals T11 and T12 of each converter unit are connected to the direct-voltage bus bar system BBS.

The control means CTRL are adapted to control the controllable switches S1 to S6 of each converter unit. The control means CTRL comprise a different control program and different control parameters for each converter unit group. The control means CTRL are adapted to control the converter units by converter unit groups in such a manner that identical converter units are used for different tasks in different converter unit groups. The control means CTRL control the converter units through a field bus (not shown).

In alternative embodiments, the control means comprise the same controller program for each converter unit group, while only the control parameters are specific for each converter unit group. Even though in Figure 1 the control means are shown as centralized means that are separate from the converter units, in alternative embodiments, the controller programs and parameters can be positioned partly or entirely to the converter units.

The driving force battery set DB is a high-voltage battery set adapted to store the energy needed to move a vehicle. A first energy storage converter unit of the first energy storage converter unit group EC1 is adapted to operate as a direct-voltage converter between the direct-voltage bus bar system BBS and driving force battery set DB. Two first terminals of the first energy storage converter unit are connected to the direct-voltage bus bar system BBS and three second terminals are connected to the driving force battery set DB. When charging the driving force battery set DB, the first energy stor-age converter unit acts as a step-up transformer and feeds energy from the direct-voltage bus bar system BBS to the driving force battery set DB. When discharging the driving force battery set DB, the first energy storage converter unit acts as a step-down transformer and feeds energy from the driving force battery set DB to the direct-voltage bus bar system BBS.

The voltage level of the low-voltage energy storage means is lower than that of the driving force battery set DB. The low-voltage energy storage means comprise a low-voltage battery LVB and a super capacitor SC. A second energy storage converter unit of the second energy storage converter unit group EC2 is adapted to operate as a direct-voltage converter between the direct-voltage bus bar system BBS and low-voltage energy storage means. Two first terminals of the second energy storage converter unit are connected to the direct-voltage bus bar system. Two of the second terminals of the second energy storage converter unit are connected to the super capacitor SC and one to the low-voltage battery LVB.

The low-voltage battery LVB can be used to charge the super capacitor SC. The super capacitor SC can be used to provide energy to start up an internal combustion engine ICE. The super capacitor SC can be discharged with a substantially higher current than the low-voltage battery LVB.

The low-voltage battery may have a nominal voltage of 12V or 24V, for instance. In alternative embodiments, the low-voltage energy storage means may comprise just the low-voltage battery without the super capacitor, or just the super capacitor without the low-voltage battery.

The three-phase drive motors DM1 to DM4 are adapted to move the vehicle. Each of the three-phase drive motors DM1, DM2, DM3, and DM4 is connected to a corresponding drive motor converter unit of the drive motor converter unit group MC. Each drive motor converter unit is adapted to operate both as an inverter and rectifier between the direct-voltage bus bar system BBS and a corresponding three-phase drive motor. When accelerating the vehicle, the drive motor converter unit operates as an inverter and supplies power to the corresponding drive motor. When decelerating the vehicle, the drive motor converter unit operates as a rectifier and supplies power to the direct-voltage bus bar system BBS.

The control means CTRL are adapted to control each of the drive motors DM1, DM2, DM3, and DM4 independent of the other drive motors. In an embodiment, each of the four drive motors is connected to a corresponding wheel of the vehicle, thus making the vehicle a four-wheel drive. Individual adjustment of the drive motors can be utilized in anti-slip regulation and road stability management.

The mains powered charger means are adapted to charge the driving force battery set DB from an electric network. The mains powered charger means comprise a mains connector PL that is adapted for connection to the electric network, and a change-over switch CS that in its first position connects the second terminals of one drive motor converter unit to the terminals of the three-phase drive motor DM4, and in its second position connects the second terminals of said one drive motor converter unit to the mains connector PL. In the second position of the change-over switch CS, the drive motor converter unit corresponding to the drive motor DM4 is adapted to operate both as an inverter and a rectifier between the direct-voltage bus bar system BBS and electric network, while the inverter operation permits energy supply from the driving force battery set DB to the electric network, in which case the electric power source assembly may operate as part of an intelligent electric network.

In an alternative embodiment, the mains powered charger means comprise a mains connector that is adapted for connection to the electric network, and a change-over switch that in its first position connects the second terminals of a converter unit to the electric network, and in its second position disconnects the second terminals of the converter unit from the mains connector. In the first position of the change-over switch, the converter unit is adapted to operate both as an inverter and rectifier between the direct-voltage bus bar system and electric network. The converter unit is solely adapted to transmit electric power between the direct-voltage bus bar system and electric network. The converter unit can use the controller program of a supply unit, and there may be a series-connected LCL filter with the converter unit.

In the embodiment of Figure 1, only one drive motor converter unit is utilized in the energy transmission between the electric network and direct-voltage bus bar system BBS. In alternative embodiments, it is possible to utilize several drive motor converter units in the energy transmission between the electric network and direct-voltage bus bar system, thus, increasing the transmission power. The change-over switch assembly can be adapted to connect one or more drive motor converter units to the electric network in accordance with the power transmission requirement.

The generator means G1 are adapted to transform the mechanical energy of the combustion engine ICE to three-phase electric current. The generator converter unit group GC comprises a generator converter unit that is adapted to operate as a rectifier between the generator means G1 and direct-voltage bus bar system BBS.

In the embodiment of Figure 1, the combustion engine ICE is not in mechanical contact with the wheels of the vehicle. A vehicle that uses this type of power source assembly is often called a series hybrid vehicle. The power source assembly of the invention can also be utilized in hybrid vehicles of other type as well as in fully electric vehicles.

The multi-voltage converter unit group MVC comprises a multi-voltage converter unit with two first terminals connected to the direct-voltage bus bar system BBS and with each second terminal adapted to supply an alternating-current load having a different operating voltage. For instance, one of the second terminals can supply a one-phase 400V motor, another of the second terminals can supply a 96V load, and a third of the second terminals can supply a 24V load. There may be a filter between the multi-voltage converter unit and its loads.

The heat resistor converter unit of the heat resistor converter unit group HC is adapted to operate as a direct-voltage converter between the direct-voltage bus bar system BBS and heat resistor means HR. The heat resistor means HR are adapted to heat the driving force battery set DB and the interior of the vehicle. In alternative embodiments, the heat resistor means may comprise one or more brake resistors.

In the embodiment of Figure 1, the drive motor converter unit group MC comprises several converter units, while each of the other converter unit groups comprises one converter unit. In alternative embodiments, the drive motor converter unit group may only comprise one converter unit, and the other converter unit groups may comprise several converter units. It is possible to use relatively low-power converter units, in which case each converter unit group comprises a necessary number of parallel-connected converter units. The control means can be adapted to control the converter units of each converter unit group individually, which means that when the power requirement is low, some of the converter units can be switched off to save energy.

Auxiliary components of identical converter units may differ in different converter unit groups. Herein, auxiliary components refer to external components, such as chokes. Figure 2 shows chokes CC21, CC22, and CC23 connected to second terminals T21, T22, and T23 as an example of auxiliary components.

It is apparent to one skilled in the art that the basic idea of the invention may be implemented in many different ways. The invention and its embodiments are thus not restricted to the examples described above, but may vary within the scope of the claims.

## Claims

1. An electric power source assembly for a vehicle, comprising
a plurality of converter unit groups (GC, EC1, MC), each one of which comprises at least one converter unit, each of the converter units comprising a plurality of controllable switches (S1 to S6), and a first terminal group and a second terminal group, the first terminal group comprising two first terminals (T11, T12) and the second terminal group comprising three second terminals (T21, T22, T23), and
control means (CTRL) for controlling the plurality of controllable switches (S1 to S6) of at least one converter unit in each converter unit group,
while the plurality of converter unit groups comprise at least one converter unit group (MC, MVC), in which at least one converter unit is adapted to operate as an inverter, **characterised in that**
the plurality of converter unit groups further comprise at least one converter unit group (EC1, EC2, HR), in which at least one converter unit is adapted to operate as a direct-voltage converter, the converter units in the plurality of converter unit groups (GC, EC1, MC, EC2, HR) being identical with one another.

2. An electric power source assembly as claimed in claim 1, **characterised in that** the power source assembly also comprises a direct-voltage bus bar system (BBS), while the first terminals (T11, T12) of at least one converter unit in each converter unit group (GC, EC1, MC, EC2, HR) are connected to the direct-voltage bus bar system (BBS).

3. An electric power source assembly as claimed in claim 1 or 2, **characterised in that** the control means (CTRL) comprise a different control program and/or different control parameters for each converter unit group.

4. An electric power source assembly as claimed in claim 2 or 3, **characterised in that** the power source assembly also comprises a driving force battery set (DB), and the plurality of converter unit groups comprise a first energy storage converter unit group (EC1) that comprises at least one first energy storage converter unit with two first terminals connected to the direct-voltage bus bar system (BBS) and with three second terminals connected to the driving force battery set (DB), while at least one first energy storage converter unit is adapted to operate as a direct-voltage converter between the direct-voltage bus bar system (BBS) and the driving force battery set (DB).

5. An electric power source assembly as claimed in any one of claims 2 to 4, **characterised in that** the power source assembly also comprises low-voltage energy storage means, the voltage level of which is lower than that of the driving force battery set (DB), and the plurality of converter unit groups comprise a second energy storage converter unit group (EC2) that comprises at least one second energy storage converter unit with two first terminals connected to the direct-voltage bus bar system (BBS) and at least one of the second terminals is connected to the low-voltage energy storage means, while at least one second energy storage converter unit is adapted to operate as a direct-voltage converter between the direct-voltage bus bar system (BBS) and low-voltage energy storage means, and the low-voltage energy storage means comprise a low-voltage battery (LVB) and/or super capacitor (SC).

6. An electric power source assembly as claimed in any one of claims 2 to 5, **characterised in that** the power source assembly also comprises at least one three-phase drive motor (DM1, DM2, DM3, DM4) and the plurality of converter unit groups comprise a drive motor converter unit group (MC) that comprises at least one drive motor converter unit for each three-phase drive motor (DM1), while each drive motor converter unit is adapted to operate both as an inverter and rectifier between the direct-voltage bus bar system (BBS) and corresponding three-phase drive motor.

7. An electric power source assembly as claimed in claim 6, **characterised in that** the power source assembly comprises a plurality of drive motors, and the control means (CTRL) are adapted to control each drive motor (DM1, DM2, DM3, DM4) independent of the other drive motors.

8. An electric power source assembly as claimed in claim 6 or 7, **characterised in that** the power source assembly also comprises mains powered charger means for charging the driving force battery set (DB) from an electric network, the main powered charger means comprising a mains connector (PL) that is adapted for connection to the electric network, and a change-over switch (CS) that in its first position connects the second terminals of at least one drive motor converter unit to the terminals of the corresponding three-phase drive motor (DM4), and in its second position connects the second terminals of said at least one drive motor converter unit to the mains connector (PL), while in the second position of the change-over switch (CS), said at least one drive motor converter unit is adapted to operate both as an inverter and rectifier between the direct-voltage bus bar system (BBS) and electric network.

9. An electric power source assembly as claimed in any one of claims 2 to 8, **characterised in that** the power source assembly also comprises generator means (G1) for transforming the mechanical energy of the combustion engine to three-phase electric current, and the plurality of converter unit groups comprise a generator converter unit group (GC) that comprises at least one generator converter unit that is adapted to operate as a rectifier between the generator means (G1) and direct-voltage bus bar system (BBS).

10. An electric power source assembly as claimed in any one of claims 2 to 9, **characterised in that** the plurality of converter unit groups comprises a multi-voltage converter unit group (MVC) that comprises at least one multi-voltage converter unit with two first terminals connected to the direct-voltage bus bar system (BBS) and with each second terminal adapted to supply an alternating-current load having a different operating voltage.

11. An electric power source assembly as claimed in any one of claims 2 to 10, **characterised in that** the power source assembly also comprises heat resistor means (HR), and the plurality of converter unit groups comprise a heat resistor converter unit group (HC) that comprises at least one heat resistor converter unit that is adapted to operate as a direct-voltage converter between the direct-voltage bus bar system (BBS) and heat resistor means (HR), while the heat resistor means (HR) are adapted to heat the driving force battery set (DB) and/or the interior of the vehicle.

12. An electric power source assembly as claimed in any one of the preceding claims, **characterised in that** the control means (CTRL) comprise different control parameters for each converter unit group (GC, EC1, MC).

13. An electric power source assembly as claimed in claim 12, **characterised in that** the control means (CTRL) comprise a different control program for each converter unit group (GC, EC1, MC).

14. A vehicle equipped with an electric power source assembly, **characterised in that** the vehicle comprises a power source assembly as claimed in any one of claims 1 to 13.
